(19) Europäisches Patentamt
European Patent Office
Office européen des brevets

(11) **EP 2 606 332 B1**

(12) # FASCICULE DE BREVET EUROPEEN

(45) Date de publication et mention de la délivrance du brevet:
**16.04.2014 Bulletin 2014/16**

(21) Numéro de dépôt: **11743310.2**

(22) Date de dépôt: **07.07.2011**

(51) Int Cl.:
**G01N 13/04** *(2006.01)*

(86) Numéro de dépôt international:
**PCT/FR2011/051618**

(87) Numéro de publication internationale:
**WO 2012/004538 (12.01.2012 Gazette 2012/02)**

(54) **PROCEDE DE MESURE DU COEFFICIENT DE TRANSPORT ELECTROOSMOTIQUE D'UNE MEMBRANE ECHANGEUSE DE PROTONS ET DISPOSITIF POUR LA MISE EN OEUVRE D'UN TEL PROCEDE**

VERFAHREN ZUR MESSUNG DES ELEKTROOSMOTISCHEN TRANSPORTKOEFFIZIENTEN EINER PROTONENAUSTAUSCHMEMBRAN UND VORRICHTUNG ZUR IMPLEMENTIERUNG EINES DERARTIGEN VERFAHRENS

METHOD OF MEASURING THE ELECTROOSMOTIC TRANSPORT COEFFICIENT OF A PROTON EXCHANGE MEMBRANE AND DEVICE FOR IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.07.2010 FR 1055571**

(43) Date de publication de la demande:
**26.06.2013 Bulletin 2013/26**

(73) Titulaire: **Commissariat à l'Énergie Atomique et aux Énergies Alternatives
75015 Paris (FR)**

(72) Inventeurs:
• **PENG, Zhe**
  **F-38000 Grenoble (FR)**
• **MORIN, Arnaud**
  **F-38100 Grenoble (FR)**

(74) Mandataire: **Lebkiri, Alexandre
Cabinet Camus Lebkiri
87 Rue Taitbout
75009 Paris (FR)**

(56) Documents cités:
**US-A- 3 871 990**

• **BRAFF W; MITTELSTEADT C: "Electroosmotic drag coefficient of proton exchange membranes as a function of relative humidity", ECS TRANSACTIONS - PROTON EXCHANGE MEMBRANE FUEL CELLS 8, PEMFC - 214TH ECS MEETING, vol. 16, no. 2, 2008, pages 309-316, XP002624142, DOI: 10.1149/1.2981865**
• **JI M; WEI Z: "A review of water management in polymer electrolyte membrane fuel cells", ENERGIES, vol. 2, no. 4, décembre 2009 (2009-12), pages 1057-1106, XP002624143, DOI: 10.3390/en20401057**
• **LUO Z ET AL: "Electro-osmotic drag coefficient and proton conductivity in Nafion<(>R) membrane for PEMFC", INTERNATIONAL JOURNAL OF HYDROGEN ENERGY, ELSEVIER SCIENCE PUBLISHERS B.V., BARKING, GB, vol. 35, no. 7, 1 avril 2010 (2010-04-01), pages 3120-3124, XP026983580, ISSN: 0360-3199 [extrait le 2009-10-12] cité dans la demande**

## Description

### DOMAINE TECHNIQUE DE L'INVENTION

La présente invention concerne un procédé de mesure du coefficient de transport électro-osmotique d'une membrane échangeuse de protons, ainsi qu'un dispositif permettant de mettre en oeuvre un tel procédé.

### ETAT DE LA TECHNIQUE ANTERIEUR

Une pile à combustible à membrane échangeuse de protons (PEMFC) est un dispositif permettant de convertir de l'énergie chimique en énergie électrique et en chaleur en recombinant du dihydrogène et de dioxygène pour former de l'eau. Les piles à combustible suscitent de plus en plus d'intérêt car elles n'émettent pas de $CO_2$ lors de leur fonctionnement.

Dans une pile à combustible à membrane échangeuse de protons, la membrane échangeuse de protons doit séparer les électrodes de la pile à combustible l'une de l'autre, empêcher le passage des électrons d'une électrode à l'autre et permettre le transport des protons générés lors de l'oxydation anodique vers la cathode. Toutefois, le mode de conduction protonique et la mobilité des protons dépendent fortement de la quantité d'eau dans la membrane.

A l'équilibre, dans des conditions données, cette quantité d'eau dans la membrane dépend de la température et de l'humidité relative des gaz. En outre, la quantité d'eau dans la membrane n'est pas homogène. En effet, la membrane est soumise à un gradient de quantité d'eau qui résulte de la compétition entre deux flux :

- le flux d'électro-osmose de l'anode à la cathode qui s'explique par le fait que lorsque les protons traversent la membrane, ils ont tendance à entraîner avec eux des molécules d'eau,
- le flux de rétrodiffusion de la cathode à l'anode qui s'explique principalement par le fait que l'accumulation de l'eau produite à la cathode et de l'eau entrainée par le flux d'électroosmose à cette électrode, qui induit ce flux diffusive.

Cette répartition inhomogène de la quantité d'eau dans l'épaisseur de la membrane limite les performances de la pile à combustible, ainsi que sa durée de vie.

Afin d'augmenter les performances de la pile à combustible et sa durée de vie, il est nécessaire d'optimiser cette répartition d'eau, ce qui passe par une meilleur connaissance de tous les phénomènes liés au transport de l'eau dans la membrane. Plus précisément, il est nécessaire de pouvoir étudier séparément les phénomènes d'électro-osmose et de rétrodiffusion, afin de pouvoir les quantifier séparément. Pour cela, il est notamment nécessaire de connaître le coefficient de transport électro-osmotique K qui est défini comme étant le nombre moyen de molécules d'eau entraînées à travers la membrane par proton en l'absence de gradient de concentration d'eau dans la membrane.

L'état de la technique connaît différentes méthodes pour déterminer ce coefficient de transport électro-osmotique.

Ainsi, la publication intitulée « Electro-osmotic drag in polymer electrolyte membranes : an electrophoretic NMR study » de M. Ise et al (Solid State Ionics 125 (1999) 213-223) propose de calculer le coefficient de transport électro-osmotique en appliquant une différence de potentiel dans un empilement de membranes placé entre deux électrodes afin qu'un courant passe à travers cet empilement de membranes. Cet ensemble est placé dans un tube RMN contenant une quantité d'eau donnée. Toutefois, les calculs du coefficient d'électroosmose ne sont pas précis puisque la quantité d'eau dans le tube RMN n'est pas connue de façon précise mais estimée en faisant de nombreuses hypothèses approximatives.

Ainsi cette méthode de détermination du coefficient de transport électro-osmotique est complexe à mettre en oeuvre et elle n'est pas fiable car les mesures sont réalisées à l'extérieur de la pile, dans un environnement différent de celui dans lequel sera la membrane lorsqu'elle sera dans une pile à combustible en fonctionnement. En outre, cette méthode nécessite d'empiler plusieurs membranes les unes sur les autres et la présence des interfaces entre les membranes parasite la mesure. En outre, la quantité d'eau dans l'empilement mesuré n'est pas homogène si bien que le coefficient de transport électro-osmotique mesuré est un coefficient moyen et non pas un coefficient pour une quantité d'eau donnée.

De même, le document intitulé « Electro-osmotic drag coefficient and proton conductivity in Nafion membrane for PEMFC » de Luo et Al, International Journal of Hydrogen Energy (2009) I-5, décrit l'utilisation d'une pompe à protons qui permet de créer un flux de protons dans le plan d'une membrane échangeuse de protons située entre deux compartiments contenant de l'eau liquide. Le flux de protons dans le plan de la membrane entraîne alors un flux d'eau dans le plan de la membrane. Les auteurs de ce document mesure alors le flux d'eau en mesurant la différence de niveau d'eau entre deux capillaires placés chacun dans un des compartiments contenant de l'eau liquide.

Toutefois, le procédé de mesure utilisé dans ce document est imprécis car il existe un gradient de quantité d'eau inconnu dans l'épaisseur de la membrane, dans chaque compartiment et également dans le plan de la membrane entre chaque compartiment. En outre, les conditions, notamment de courant, utilisée dans ce procédé de mesure sont très différentes de celles qui existent dans une pile à combustible en fonctionnement, ce qui induit des imprécisions de mesure.

Braft et Mittelsteadt, voir "Electroosmotic drag coefficient of proton exchange membranes as a function of relative humidity", ECS Transactions 16(2), pages 309-316 (2008), divulgue un procédé de détermination du coefficient de transport électro-osmotique d'une membrane échangeuse de protons, la membrane étant disposée entre un premier compartiment et un deuxième compartiment, le premier et le deuxième compartiments s'étendant chacun de part et d'autre de la membrane, le premier et le deuxième compartiment présentant chacun une entrée, le premier compartiment présentant une sortie, l'entrée du second compartiment étant située vis-à-vis de la sortie du premier compartiment et la sortie du premier compartiment étant située à coté de la sortie du second compartiment, le procédé comportant les étapes suivantes :

- (i) établissement d'un flux de gaz hydraté dans le premier compartiment, le flux de gaz hydraté dans le premier compartiment étant un flux d'hydrogène hydraté, le flux de gaz hydraté étant dirigé de l'entrée vers la sortie, le niveau d'humidité, dans chacun des compartiments, étant contrôlé de façon à ce que, en régime permanent, l'humidité relative en sortie d'au moins un des compartiments soit égale à l'humidité relative en sortie de l'autre des compartiments;

- (ii) établissement d'un courant de protons à travers la membrane du premier compartiment en direction du deuxième compartiment;

- (iii) calcul du coefficient de transport électro-osmotique.

En outre, les procédés de mesure de l'art antérieur ne permettent pas de s'assurer que le coefficient de transport électro-osmotique calculé est bien représentatif du flux d'électro-osmose dans la membrane, et n'est pas influencé par des phénomènes de rétrodiffusion.

## EXPOSE DE L'INVENTION

L'invention vise à remédier aux inconvénients de l'état de la technique en proposant un procédé de détermination du coefficient de transport électro-osmotique dans une membrane échangeuse de proton d'une pile à combustible qui soit plus fiable que les procédés de l'art antérieur.

Un autre objet de l'invention est de proposer un procédé qui permette de mesurer le coefficient de transport électro-osmotique dans une membrane échangeuse de proton dans des conditions réelles ou des conditions proches des conditions réelles.

Un autre objet de l'invention est de proposer un procédé de détermination du coefficient de transport électro-osmotique dans une membrane échangeuse de protons qui puisse être mis en oeuvre directement dans une pile à combustible, sans avoir à démonter cette pile à combustible.

Un autre objet de l'invention est de proposer un procédé de détermination du coefficient de transport électro-osmotique dans une membrane échangeuse de protons qui soit simple, rapide et précis.

Un autre objet de l'invention est de proposer un procédé de détermination du coefficient de transport électro-osmotique qui soit représentatif du phénomène d'électro-osmose uniquement.

Un autre objet de l'invention est de proposer un dispositif qui permette de mettre en oeuvre le procédé selon l'invention.

Pour ce faire, un premier aspect de l'invention concerne un procédé de détermination du coefficient de transport électro-osmotique d'une membrane échangeuse de protons, la membrane étant disposée entre un premier compartiment et un deuxième compartiment, le premier et le deuxième compartiments s'étendant chacun de part et d'autre de la membrane, le premier et le deuxième compartiments présentant chacun une entrée et une sortie, l'entrée du premier compartiment étant située vis-à-vis de la sortie du deuxième compartiment et inversement, le procédé comportant les étapes suivantes :

- (i) Etablissement d'un flux de gaz hydraté dans chacun des compartiments, le flux de gaz hydraté dans le premier compartiment étant un flux d'hydrogène hydraté, le flux de gaz hydraté étant dirigé, dans chacun des compartiments, de l'entrée vers la sortie, le flux de gaz hydraté, dans chacun des compartiments, étant contrôlé de façon à ce que, en régime permanent, l'humidité relative en entrée d'au moins un des compartiments soit égale à l'humidité relative en sortie de l'autre des compartiments ;
- (ii) Etablissement d'un courant de protons à travers la membrane du premier compartiment en direction du deuxième compartiment,

- (iii) Détermination du flux d'eau total qui traverse la membrane, en régime permanent, du premier compartiment en direction du deuxième compartiment à l'aide d'au moins une mesure de la quantité d'eau en sortie du deuxième compartiment,
- (iv) Calcul du coefficient de transport électro-osmotique à partir du flux d'eau total.

Dans tout ce document, le coefficient de transport électro-osmotique est défini comme étant le nombre moyen de molécules d'eau entraînées à travers la membrane par proton en l'absence de gradient de concentration d'eau dans la membrane. Le coefficient de transport électro-osmotique est également appelé coefficient d'électro-osmose.

Par « gaz hydraté », on entend un fluide qui comprend des molécules de gaz, par exemple de dihydrogène ou de dioxygène, et des molécules d'eau.

Par « hydrogène hydraté », on entend un fluide qui comprend des molécules $H_2$ et $H_2O$. Pour obtenir ce flux d'hydrogène hydraté, qui est un mélange de molécules d'hydrogène et d'eau, on peut par exemple faire passer de l'hydrogène gazeux dans une enceinte contenant de l'eau liquide à une température de rosée donnée. Une autre méthode pour obtenir ce flux d'hydrogène hydraté, on peut également mélanger des flux de vapeur d'eau et de gaz sec avec des débits donnés.

L'humidité relative d'un milieu, couramment notée φ ou HR, correspond au rapport de la pression partielle de vapeur d'eau contenue dans ce milieu sur la pression de vapeur saturante (ou tension de vapeur) à la même température. L'humidité relative d'un milieu est donc une mesure du rapport entre le contenu en d'eau d'un milieu et sa capacité maximale à en contenir dans ces conditions.

Le fait d'envoyer de part et d'autre de la membrane des flux de gaz hydraté, qui longent la membrane en sens inverse l'un de l'autre, et de contrôler ces flux de gaz hydraté en entrée de chacun des compartiments de façon à ce que l'humidité relative en entrée d'au moins un des compartiments soit égale à l'humidité relative en sortie de l'autre des compartiments, permet de s'assurer que l'humidité relative varie peu de part et d'autre de la membrane.

Ainsi, le contrôle des flux de gaz hydraté permet d'avoir une répartition d'eau homogène de part et d'autre de la membrane, ce qui permet de limiter au maximum le phénomène de rétrodiffusion. Par conséquent, le coefficient de transport électro-osmotique obtenu à l'aide du procédé selon l'invention est réellement représentatif du phénomène d'électro-osmose.

Le procédé selon l'invention permet donc de calculer de manière simple et précise le coefficient de transport électro-osmotique.

En outre, le procédé selon l'invention est particulièrement avantageux car il peut être mis en oeuvre directement dans une pile à combustible, dans laquelle, au lieu d'envoyer un flux d'hydrogène dans un des compartiments et un flux d'oxygène dans l'autre, on envoie un flux d'hydrogène hydraté dans le premier compartiment et un flux de gaz hydraté dans le deuxième compartiment. Le flux de gaz hydraté dans le deuxième compartiment parcourt la membrane en sens inverse du flux d'hydrogène hydraté dans le premier compartiment.

En outre, la détermination du flux d'eau total qui traverse la membrane par mesure d'humidité relative est simple à mettre en oeuvre, précise, et elle peut être effectuée, à l'aide d'appareils disponibles dans le commerce, directement en sortie de pile à combustible.

Le procédé selon l'invention peut également présenter une ou plusieurs des caractéristiques ci-dessous, considérées individuellement ou selon toutes les combinaisons techniquement possibles.

Avantageusement, le flux de gaz hydraté dans le deuxième compartiment est également un flux d'hydrogène hydraté.

Avantageusement, la membrane s'étend suivant une direction longitudinale et les premier et deuxième compartiment s'étendent de part et d'autre de la membrane suivant la direction longitudinale.

Avantageusement, le flux de gaz hydraté, dans chacun des compartiments, est en outre contrôlé de façon à ce que, en régime permanent, l'humidité relative reste sensiblement la même entre l'entrée et la sortie de chaque compartiment.

Les flux de gaz hydraté de part et d'autre de la membrane sont de préférence contrôlés de façon à ce que :

- Lorsque l'on choisit deux points situés de part et d'autre de la membrane, les deux points appartenant au même plan transversal, l'humidité relative entre ces deux points ne varie pas plus de cinq pourcents entre ces deux points ;
- Lorsque l'on se déplace dans un compartiment selon la direction longitudinale, l'humidité relative dans ce compartiment ne varie pas plus de 5% entre l'entrée et la sortie.

On appele « direction transversale », une direction perpendiculaire à la direction longitudinale.

Avantageusement, les flux de gaz hydraté sont contrôlés de manière à ce que, lorsque l'on se place dans un plan transversal, l'humidité relative est, en tout point, égale de part et d'autre de la membrane.

Avantageusement, le flux de gaz hydraté, dans chacun des compartiments, est contrôlé de façon à ce que, en régime permanent, l'humidité relative reste sensiblement la même entre l'entrée et la sortie de chaque compartiment.

Afin de s'assurer que les humidités relatives sont homogènes lorsque l'on se déplace entre l'entrée et la sortie d'un compartiment, on asservit de préférence le débit des flux de gaz hydraté à l'intensité du courant de protons qui traverse la membrane, de façon à ce que le flux de protons, et donc d'eau, qui traverse la membrane soit négligeable devant le flux de gaz hydraté, et donc d'eau, qui parcoure chacun des compartiments de part et d'autre de la membrane. Cette méthode permet d'avoir une variation négligeable de l'humidité relative lorsque l'on se déplace suivant la direction longitudinale dans un des compartiments.

On contrôle donc le flux d'hydrogène hydraté de façon à ce qu'il soit très important devant les flux de protons et d'eau qui traversent la membrane.

Avantageusement, le flux de gaz hydraté qui traverse chacun des compartiments est de préférence entre 10 fois et 2000 fois plus important que le flux de protons qui traverse la membrane. Le flux de gaz hydraté est de préférence entre 50 et 1500 fois plus grand que le flux de protons qui traverse la membrane, et de préférence sensiblement égal à 1000 fois le flux de protons qui traverse la membrane.

La mesure de la quantité d'eau en sortie du deuxième compartiment peut être :

-     Une mesure de l'humidité relative en sortie du deuxième compartiment ;
-     Une mesure de la masse d'eau à la sortie du deuxième compartiment.

Par ailleurs, afin de s'assurer que deux points situés de part et d'autre de la membrane présentent sensiblement la même humidité relative, deux méthodes peuvent être utilisées.

Selon la première méthode, l'étape (i) comporte les étapes suivantes :

-     Envoi d'un flux d'hydrogène hydraté unique en entrée d'un des compartiments de façon à ce que ce flux d'hydrogène unique traverse ce compartiment,
-     Récupération du flux d'hydrogène hydraté unique en sortie de ce compartiment,
-     Envoi du flux d'hydrogène hydraté unique récupéré en entrée de l'autre des compartiments.

Ainsi, la première méthode consiste à relier la sortie d'un des compartiments à l'entrée de l'autre en faisant un bouclage. De cette façon, l'humidité relative à l'entrée d'un des compartiments est toujours égale à l'humidité relative à la sortie de l'autre des compartiments, et ce, que le courant de protons dans la membrane soit nul ou non. En effet, lorsque l'on établit un courant protonique dans la membrane, les protons ont tendance à entraîner avec eux des molécules d'eau. Ainsi, les molécules du premier compartiment ont tendance à être entraînées dans le deuxième compartiment. Or, comme la sortie d'un des compartiments est reliée à l'entrée de l'autre des compartiments, les molécules d'eau qui avaient été entraînées du premier compartiment vers le deuxième compartiment sont ramenées dans le premier compartiment via le bouclage, ce qui permet d'avoir une répartition d'eau homogène entre les deux compartiments. Ainsi, il n'y a pas de gradient dans la membrane et donc il n'y a pas de rétrodiffusion.

Selon ce mode de réalisation, le flux de gaz hydraté est un flux d'hydrogène hydraté dans les deux compartiments.

Avantageusement, la sortie du deuxième compartiment est reliée de manière fluidique à l'entrée du premier compartiment.

Selon la deuxième méthode, l'étape (i) comporte les étapes simultanées suivantes :

-     Envoi d'un flux d'hydrogène hydraté en entrée du premier compartiment de façon à ce que l'humidité relative en entrée du premier compartiment soit égale à l'humidité relative en sortie du deuxième compartiment ;
-     Envoi d'un flux de gaz hydraté en entrée du deuxième compartiment de façon à ce que l'humidité relative en entrée du deuxième compartiment soit égale à l'humidité relative en sortie du premier compartiment.

Ainsi, la deuxième méthode consiste à mesurer l'humidité relative à la sortie de chaque compartiment et à asservir le flux de gaz hydraté en entrée de chaque compartiment à l'humidité relative en sortie de l'autre compartiment. Selon ce mode de réalisation, les flux de gaz hydratés qui vont dans chaque compartiment proviennent de deux sources différentes, mais les humidités relatives qu'ils génèrent en entrée de chacun des compartiments sont identiques. Ainsi, l'humidité relative de part et d'autre de la membrane est identique, ce qui permet d'éviter le phénomène de rétrodiffusion. Toutefois, cette méthode est plus compliquée que la précédente.

Selon un mode de réalisation préférentiel, l'étape (iii) de détermination du flux d'eau total qui traverse la membrane comporte les étapes suivantes :

-     Calcul du flux d'eau envoyé en entrée d'un des compartiments,
-     Mesure de l'humidité relative en sortie de ce compartiment,
-     Calcul du flux d'eau en sortie de ce compartiment,

- Calcul du flux d'eau total ayant traversé la membrane en calculant la différence entre le flux d'eau en entrée et en sortie de ce compartiment.

En effet, en faisant la différence entre le flux d'eau en entrée d'un compartiment, qui est connu, et le flux d'eau en sortie de ce même compartiment, qui est égal au flux d'eau en entrée auquel s'est ajoutée (ou enlevée) l'eau qui a traversé la membrane, on obtient le flux d'eau qui a traversé la membrane.

Avantageusement, le flux d'eau en sortie d'un compartiment est calculé à partir de la mesure de l'humidité relative en sortie de ce compartiment. Le flux d'eau en sortie d'un compartiment peut également être calculé à partir de la mesure de la masse d'eau ou du volume d'eau en sortie de ce compartiment.

Avantageusement, le flux d'eau en entrée d'un compartiment est calculé à partir :

- de la mesure du débit de gaz hydraté qui est envoyé en entrée de ce compartiment, et
- de l'humidité relative de l'hydrogène qui est connue ;
- de la pression totale du gaz ;
- de la pression de vapeur saturante du gaz, qui dépend de la température du gaz.

Selon un premier mode de réalisation du procédé selon l'invention, lors de l'étape (iv), le flux d'eau total est de préférence assimilé à un flux d'électro-osmose.

En effet, en première approximation, comme on a limité au maximum les différences entre les humidités relatives de part et d'autre de la membrane, on peut considérer qu'il n'y a pas de rétrodiffusion à travers la membrane et donc que le flux d'électro-osmose est sensiblement égal au flux d'eau total.

Le coefficient de transport électro-osmotique est alors calculé en considérant que le flux d'électro-osmose est égal au flux d'eau total.

Ce mode de réalisation de l'invention présente l'avantage d'être très simple à mettre en oeuvre et tout de même relativement précis, puisqu'en réalité, le flux de rétrodiffusion est effectivement très faible devant le flux d'électro-osmose.

Selon un autre mode de réalisation préférentiel du procédé selon l'invention, l'étape (iv) comporte les étapes suivantes :

- (v) une étape de calcul du flux de rétrodiffusion qui traverse la membrane du deuxième compartiment vers le premier compartiment ;
- (vi) une étape de calcul du flux d'électro-osmose en faisant la somme du flux d'eau total et du flux d'eau de rétrodiffusion.

Ainsi, ce deuxième mode de réalisation de l'invention comporte une étape d'estimation du flux de rétrodiffusion, ce qui permet d'avoir un résultat plus précis concernant le coefficient de transport électro-osmotique.

En effet, même si le flux de rétrodiffusion est très faible, il peut être nécessaire de l'estimer pour avoir un résultat plus précis.

L'étape (v) de calcul du flux de rétrodiffusion comporte de préférence les étapes suivantes :

- Arrêt du courant de protons à travers la membrane;
- Enregistrement de la courbe représentative de l'évolution de l'humidité relative en sortie du deuxième compartiment en fonction du temps ;
- Calcul de la courbe représentative de l'évolution du flux d'eau en sortie du deuxième compartiment en fonction du temps ;
- Calcul du flux de rétrodiffusion par interpolation de la courbe représentative de l'évolution du flux d'eau en sortie du deuxième compartiment en fonction du temps.

En effet, la courbe d'évolution de l'humidité relative en sortie du deuxième compartiment en fonction du temps et la courbe d'évolution du flux d'eau en sortie du deuxième compartiment en fonction du temps sont égales, à un coefficient multiplicateur près.

L'étape de calcul du flux de rétrodiffusion par interpolation comporte de préférence les étapes suivantes :

- Recherche de la fonction de la forme $\lambda_1 e^{-t/\tau_1} + \lambda_2 e^{-t/\tau_2} + \lambda_3$ qui s'approche le plus de la courbe représentative du flux d'eau en sortie du deuxième compartiment en fonction du temps, avec un premier terme $\lambda_1$ associé au flux d'eau total dont la constante de temps est $\tau_1$, et un second terme $\lambda_2$ avec $\tau_2$ associé à la relaxation de gradient d'eau dû à la rétrodiffusion ;
- Identification du flux de rétrodiffusion au coefficient $\lambda_2$ associée à la constante de temps $\tau_2$ qui est plus élevée par rapport à $\tau_1$.

En effet, on peut estimer le flux de rétrodiffusion à partir de la cinétique de retour à l'équilibre de l'humidité relative à partir de l'instant où l'on coupe les flux de gaz hydraté. En effet, dès que le courant est stoppé, le flux d'électro-osmose s'arrête très rapidement avec un temps caractéristique $\tau_1$ faible alors que le gradient d'eau dans la membrane met lui plus de temps à se relaxer par la diffusion, ce qui fait que le flux de rétrodiffusion met plus de temps à disparaître avec un temps caractéristique $\tau_2$ élevé.

Ainsi, l'évolution de l'humidité relative au cours du temps et donc du flux d'eau en sortie du deuxième compartiment dès lors qu'on stoppe le courant, peut être représentée par deux exponentielles du premier ordre définies chacune par une amplitude et un temps caractéristique, avec l'amplitude qui représente le flux total ou le flux de rétrodiffusion et le temps caractéristique qui représente le temps de relaxation du flux total et du flux de rétrodiffusion après l'arrêt du courant dans la membrane. En interpolant la courbe de retour à l'équilibre de l'humidité relative, on peut donc calculer le flux de rétrodiffusion en régime permanent correspondant à l'amplitude $\lambda_2$.

Le flux d'électro-osmose est alors égal au flux d'eau total auquel on ajoute le flux de rétrodiffusion. Le coefficient de transport électro-osmotique est alors calculé à partir du flux d'électro-osmose uniquement.

Avantageusement, le procédé selon l'invention comporte en outre une étape de vérification que la quantité d'eau dans la membrane n'évolue pas au cours de la mesure par mesure de la résistance de l'ensemble « premier compartiment-deuxième compartiment-membrane » par spectroscopie d'impédance.

Le procédé selon l'invention permet donc de mesurer le coefficient d'électro-osmose dans des conditions réelles, de prendre en compte la rétrodiffusion lorsqu'une mesure très précise est nécessaire, de bien maîtriser la quantité d'eau dans la membrane, de faire une mesure rapide du coefficient de transport électro-osmotique.

En outre, le procédé selon l'invention permet d'étudier l'évolution du coefficient de transport électro-osmotique notamment en fonction de la température, de la quantité d'eau dans la membrane ou de la densité de courant si besoin est, car le procédé selon l'invention permet de faire plusieurs mesures en conditions réelles en faisant varier les paramètres comme la température de la membrane, la quantité d'eau dans la membrane ou la densité de courant.

L'invention concerne également un dispositif pour la détermination du coefficient de transport électro-osmotique d'une membrane échangeuse de protons à l'aide du procédé selon l'une quelconque des revendications précédentes, le dispositif comportant les éléments suivants :

- Un premier et un deuxième compartiments (2, 3) s'étendant de part et d'autre de la membrane (1), le premier et le deuxième compartiment comportant chacun une entrée (10, 11) et une sortie (12, 13), l'entrée (10) du premier compartiment (2) étant située vis-à-vis de la sortie (13) du deuxième compartiment (3) et inversement,
- au moins une alimentation en gaz hydraté (8, 20, 27) apte à envoyer un flux d'hydrogène hydraté en entrée (10) du premier compartiment (2) et un flux de gaz hydraté (3) en entrée (11) du deuxième compartiment (3),
- Une alimentation électrique (16) apte à établir un courant protonique à travers la membrane (1) du premier compartiment (2) vers le deuxième compartiment (3),
- Des moyens de mesure (22) de la quantité d'eau en sortie du deuxième compartiment,
- Des moyens de mesure et de contrôle du débit (19, 26) de l'alimentation en en gaz hydraté en entrée du deuxième compartiment,
- Un calculateur apte à mettre en oeuvre les étapes du procédé selon l'un quelconque des modes de réalisation de l'invention.

Le dispositif selon l'invention peut également présenter une ou plusieurs des caractéristiques ci-dessous, considérées individuellement ou selon toutes les combinaisons techniquement possibles.

Avantageusement, le dispositif selon l'invention comporte en outre un système de bouclage qui relie la sortie du deuxième compartiment à l'entrée du premier compartiment.

Avantageusement, le premier compartiment comporte une anode disposée contre la membrane et un canal disposé contre l'anode et dans lequel peut s'écouler le flux de gaz hydraté.

Avantageusement, le deuxième compartiment comporte une cathode disposée contre la membrane et un canal disposé contre la cathode et dans lequel peut s'écouler le flux de gaz hydraté.

Avantageusement, les moyens de mesure de l'humidité relative sont aptes à mesurer l'humidité relative avec une précision de +/- 0,1% avec une résolution temporelle inférieure à la seconde. Ce type de capteur est disponible commercialement.

Selon un autre mode de réalisation, l'humidité relative peut également être calculée par mesure de la vitesse de propagation d'une onde ultrason dans le milieu dans lequel on veut connaître l'humidité relative. C'est ce qui permet d'avoir la précision et la résolution temporaire nécessaire.

Avantageusement, la membrane s'étend suivant une direction longitudinale.

## BREVE DESCRIPTION DES FIGURES

D'autres caractéristiques et avantages de l'invention ressortiront à la lecture de la description qui suit, en référence aux figures annexées, qui illustrent :

- la figure 1, une représentation schématique en coupe d'une pile à combustible dans laquelle le procédé selon l'invention est mis en oeuvre,
- la figure 2, une représentation schématique en coupe d'un dispositif mettant un oeuvre le procédé selon l'invention,
- la figure 3, une représentation schématique en coupe d'un dispositif mettant en oeuvre un procédé selon un premier mode de réalisation de l'invention,
- la figure 4, une représentation schématique en coupe d'un dispositif mettant en oeuvre un procédé selon un deuxième mode de réalisation de l'invention,
- la figure 5, une courbe représentant l'évolution de l'humidité relative en fonction du temps permettant d'estimer le flux de rétrodiffusion dans la membrane de l'une quelconque des figures précédentes,
- la figure 6, une courbe représentant les résultats obtenus pour le coefficient de transport électro-osmotique par le procédé selon l'invention en fonction de l'humidité relative de la cellule,
- la figure 7, une courbe représentant les résultats obtenus pour le coefficient de transport électro-osmotique par le procédé selon l'invention en fonction de la quantité d'eau dans la membrane,
- la figure 8, les étapes d'un procédé selon l'invention ;
- la figure 9, une vue de dessus d'un autre dispositif mettant en oeuvre le procédé selon l'invention ;
- la figure 10, une vue en coupe du dispositif de la figure 9.

Pour plus de clarté, les éléments identiques ou similaires sont repérés par des signes de référence identiques sur l'ensemble des figures.

## DESCRIPTION DETAILLEE D'UN MODE DE REALISATION

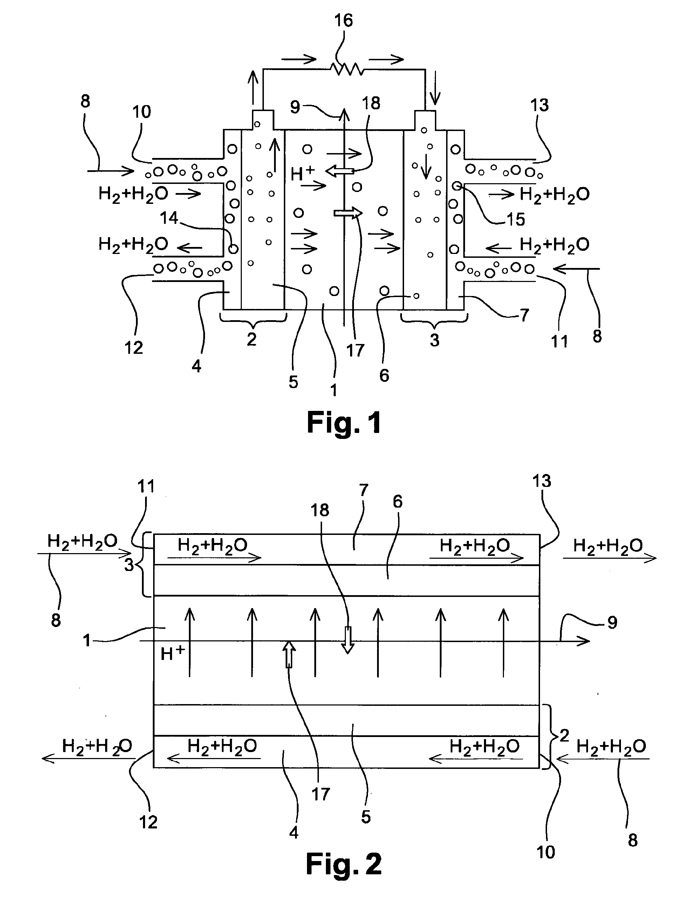

La figure 1 représente une monocellule de pile à combustible dans laquelle est mise en oeuvre le procédé selon l'invention.

La figure 2 représente un dispositif dans lequel le procédé selon l'invention est mis en oeuvre.

Dans le cas de la figure 1, comme dans le cas de la figure 2, on souhaite mesurer le coefficient de transport électro-osmotique K d'une membrane 1 échangeuse de protons.

Pour cela, la membrane 1 est disposée entre un premier compartiment 2 et un deuxième compartiment 3. Le premier compartiment 2 comporte un premier canal 4 dans lequel des espèces chimiques peuvent circuler et une anode 5. Le deuxième compartiment 3 comporte un deuxième canal 7 dans lequel des espèces chimiques peuvent circuler et une cathode 6.

La membrane s'étend suivant une direction longitudinale 9. Le premier et le deuxième canal s'étendent chacun de part et d'autre de la membrane suivant la direction longitudinale 9.

Le premier et le deuxième canal 4, 7 comportent chacun une entrée, respectivement 10, 11, et une sortie, respectivement 12, 13. L'entrée de chaque canal est située au niveau d'une extrémité de la membrane et la sortie de chaque canal est située au niveau d'une extrémité de la membrane.

L'entrée 10 du premier canal est située en face de la sortie 13 du deuxième canal et l'entrée 11 du deuxième canal est située en face de la sortie 12 du premier canal.

Les dispositifs permettant de mettre en oeuvre le procédé selon l'invention comportent en outre au moins une alimentation 8 en hydrogène hydraté apte à envoyer un flux d'hydrogène hydraté dont le débit est contrôlé dans chacun des canaux.

Ainsi, du fait de la disposition des canaux le long de la membrane, le flux d'hydrogène hydraté 14 dans le premier canal 4 longe la membrane en sens opposé du flux d'hydrogène hydraté 15 qui parcoure le deuxième canal 7.

Le dispositif permettant de mettre en oeuvre le procédé selon l'invention comporte aussi une alimentation électrique 16 qui relie l'anode 5 à la cathode 6 et qui permet d'établir entre l'anode et la cathode un courant électrique qui entraîne l'établissement d'un courant de protons $H^+$ dans la membrane 1. Ce courant de protons traverse la membrane depuis le premier compartiment en direction du deuxième compartiment.

On pourrait également envisager d'inverser le courant et dans ce cas, l'anode deviendrait la cathode et inversement.

Les protons $H^+$ qui traversent la membrane entraînent avec eux des molécules d'eau, ce qui créé un flux d'électro-osmose 17 du premier compartiment vers le deuxième compartiment.

Afin de mieux connaître le comportement de la membrane, il est avantageux de pouvoir étudier séparément le phénomène d'électro-osmose et le phénomène de rétrodiffusion. Pour cela, la connaissance du coefficient de transport électro-osmostique est nécessaire.

Le coefficient de transport électro-osmotique K est donné par la formule suivante :

$$K = \frac{\phi_{électroosmose}}{\phi_{H^+}}$$

Où $\Phi_{électroosmose}$ est le flux d'électro-osmose ; le flux d'électro-osmose peut également être défini comme étant le flux d'eau imposé par le flux de protons) qui traverse la membrane ;
$\Phi_H^+$ est le flux de protons qui traverse la membrane.

Le flux de protons qui traverse la membrane $\Phi_H^+$ dépend du courant appliqué entre l'anode et la cathode et l'état de la technique connaît différentes méthodes pour calculer précisément ce flux de protons qui traverse la membrane, connaissant le courant appliqué entre l'anode et la cathode.

Le procédé selon l'invention est particulièrement remarquable en ce qu'il permet de déterminer précisément le flux d'électro-osmose $\Phi_{électroosmose}$.

Pour cela, le procédé selon l'invention propose tout d'abord :

- de mesurer le flux d'eau total qui traverse la membrane et qui est la résultante du flux d'électro-osmose et du flux de rétrodiffusion,
- de minimiser le flux de rétrodiffusion de façon à le rendre négligeable, de sorte que le flux d'eau total soit sensiblement égal au flux d'électro-osmose.

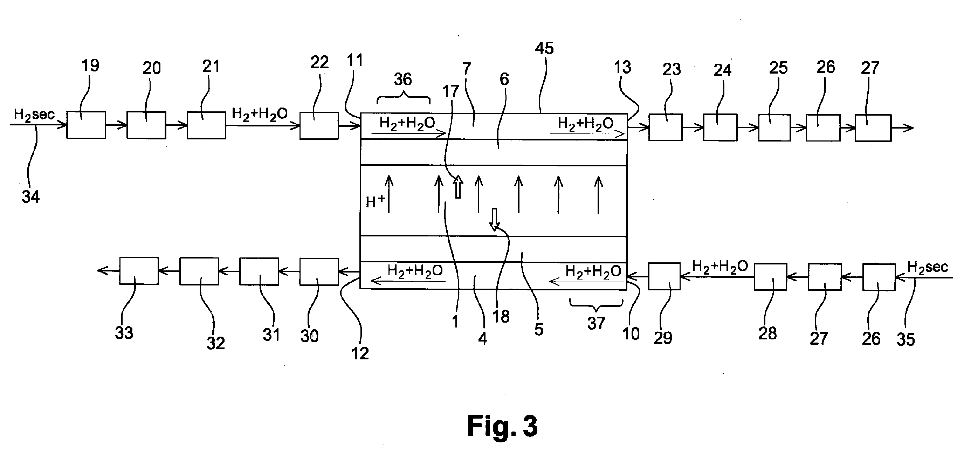

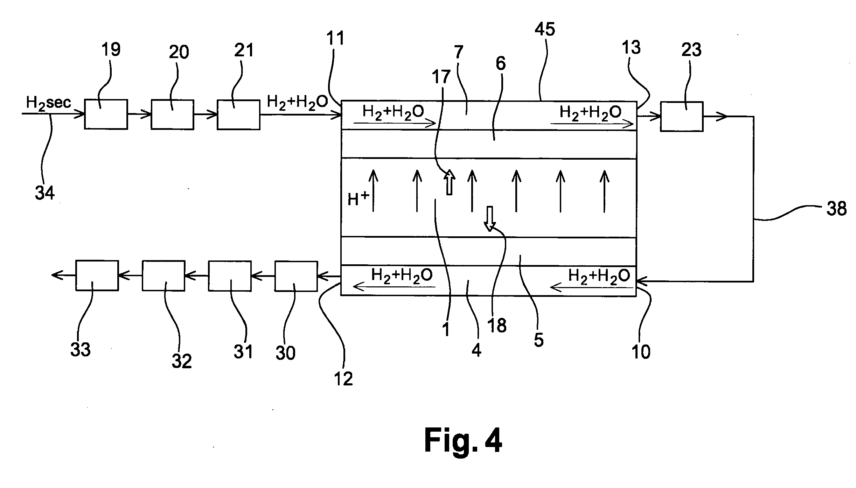

Les étapes du procédé selon l'invention permettant de minimiser le flux de rétrodiffusion dans la membrane vont maintenant être décrites plus en détail en référence aux figures 3 et 4.

En effet, pour minimiser le flux de rétrodiffusion, le procédé selon l'invention propose tout d'abord de contrôler les flux d'hydrogène hydraté en entrée de chacun des compartiments de façon à ce que l'humidité relative dans l'ensemble « premier et deuxième compartiment-membrane » soit homogène.

Plus précisément, le procédé selon l'invention propose de contrôler les flux d'hydrogène hydraté en entrée d'au moins un des compartiments de façon à ce que :

- l'humidité relative reste sensiblement la même le long de chaque compartiment lorsque l'on se déplace suivant la direction longitudinale ;
- l'humidité relative en entrée 10 du premier compartiment soit égale à l'humidité relative en sortie 13 du deuxième compartiment. De cette façon, l'humidité relative reste sensiblement la même de part et d'autre de la membrane.

Afin de s'assurer que l'humidité relative reste sensiblement la même le long de chaque compartiment lorsque l'on se déplace suivant la direction longitudinale, le procédé selon l'invention propose de choisir les flux d'hydrogène hydratés en entrée de chacun des compartiments de sorte que l'humidité relative, c'est-à-dire la concentration en eau, varie très peu entre l'entrée et la sortie de chaque compartiment, quel que soit le courant, en imposant des flux d'hydrogène hydraté 14, 15 bien plus élevés que les flux d'eau 17, 18 qui traversent la membrane.

Pour cela, les flux d'hydrogène hydraté en entrée de chacun des compartiments sont de préférence choisis de façon à ce qu'ils soient 1000 fois plus importants que les flux de protons qui traversent la membrane.

Ainsi, la concentration d'eau locale est très homogène dans chacun des compartiments :

$$HR_1^{entrée} = HR_1^{sortie} + \Delta HR_1$$

et

$$HR_2^{entrée} = HR_2^{sortie} + \Delta HR_2.$$

Avec $HR_1^{entrée}$ qui représente l'humidité relative en entrée du premier compartiment,

$HR_1^{sortie}$ qui représente l'humidité relative en sortie du premier compartiment,

$HR_2^{entrée}$ qui représente l'humidité relative en entrée du deuxième Compartiment,

$HR_2^{entrée}$ qui représente l'humidité relative en sortie du deuxième Compartiment,

$\Delta HR_1$ qui est compris entre ]0 ; 5%] de $HR_1^{entrée}$ et $\Delta HR_2$ qui est compris entre ]0 ; 5%] de $HR_2^{entrée}$ .

De cette façon, l'humidité relative est relativement homogène suivant la direction longitudinale et il n'y a donc un très faible gradient de la concentration d'eau suivant la direction longitudinale.

Par ailleurs, afin de s'assurer que l'humidité relative d'un côté de la membrane est égale à l'humidité relative de l'autre côté de la membrane, le procédé selon l'invention propose :

- soit de réguler l'humidité relative à l'entrée d'un des compartiments de façon à ce qu'elle soit identique à celle de la sortie de l'autre compartiment par une mesure lorsque le courant est nul et une mesure lorsque le courant est non nul. Dans ce cas, les flux d'hydrogène hydraté qui alimentent chacun des compartiments proviennent de deux sources différentes dont les débits sont régulés indépendamment l'un de l'autre mais dont les humidités relatives sont reliées ; il s'agit la première méthode de régulation des flux qui peut être utilisée par le procédé selon l'invention ;
- soit de relier la sortie d'un des compartiments à l'entrée de l'autre des compartiments en faisant un bouclage. Avec cette configuration, les humidités relatives des deux compartiments sont directement reliées. Grâce au bouclage, l'humidité relative à l'entrée d'un des compartiments est toujours identique à celle de la sortie de l'autre des compartiments, que le courant soit nul ou non. Cette dernière méthode est beaucoup plus simple à mettre en oeuvre et demande moins de matériel ; il s'agit de la deuxième méthode de régulation des flux qui peut être utilisée par le procédé selon l'invention.

La figure 3 représente schématiquement un dispositif qui met en oeuvre un procédé selon l'invention qui utilise la première méthode de régulation des flux d'hydrogène hydraté.

Le dispositif de la figure 3 comporte, en entrée 11 du deuxième compartiment, respectivement en entrée 10 du premier compartiment:

- une alimentation en hydrogène sec 34, 35,
- des moyens de contrôle du débit en hydrogène 19, 26,
- un capteur de pression 20, 27,
- un humidificateur 21, 28 qui permet de transformer l'hydrogène sec issu de l'alimentation en hydrogène en hydrogène hydraté,
- des moyens de mesure de l'humidité relative 22, 29 en entrée du deuxième compartiment (respectivement du premier compartiment),

Le dispositif de la figure 3 comporte en outre au niveau de la cellule un capteur de température 45 apte à mesurer la température de la cellule $T_{cellule}$.

Le dispositif de la figure 3 comporte en outre en sortie 13 du deuxième compartiment un capteur 23 apte à mesurer de manière très précise l'humidité relative en sortie 13 du deuxième compartiment.

Le capteur 23 permet de préférence de mesurer l'humidité relative avec une précision de +/- 0, 1 % avec une résolution temporelle inférieure à la seconde.

En outre, le dispositif de la figure 3 comporte de préférence en sortie 13 du deuxième compartiment (respectivement en sortie 12 du premier compartiment) :

- un séparateur de phase 24, 30,
- un condenseur 25, 31,
- un capteur de pression 26, 32,
- un régulateur de pression 27, 33.

Selon ce mode de réalisation de l'invention, les flux d'hydrogène hydraté 36 et 37 en entrée du deuxième et du premier compartiment sont indépendants, mais l'humidité relative en sortie 13 du deuxième compartiment est mesurée en permanence grâce au capteur 23 et le flux d'hydrogène hydraté 37 injecté en entrée 10 du premier compartiment est asservi, grâce au moyen de mesure de l'humidité relative 29, de façon à ce que l'humidité relative en entrée 10 du premier compartiment soit égale à l'humidité relative mesurée en sortie 13 du deuxième compartiment.

Ce mode de réalisation est cependant relativement compliqué à mettre en oeuvre.

La figure 4 représente schématiquement un dispositif qui met en oeuvre un procédé selon l'invention qui utilise la deuxième méthode de régulation des flux d'hydrogène hydraté.

Ce dispositif est beaucoup plus simple que le dispositif de la figure 3 puisqu'il comporte uniquement, en entrée 11 du deuxième compartiment :

- une alimentation en hydrogène sec 34,
- des moyens de contrôle du débit d'hydrogène sec 19,
- un capteur de pression 20,
- un humidificateur 21 qui permet de transformer l'hydrogène sec issu de l'alimentation en hydrogène en hydrogène hydraté.

Le dispositif de la figure 4 comporte en outre au niveau de la cellule un capteur de température 45 apte à mesurer la température de la cellule $T_{cellule}$.

Le dispositif de la figure 4 comporte en outre en sortie 13 du deuxième compartiment un capteur 23 apte à mesurer de manière très précise l'humidité relative en sortie 13 du deuxième compartiment.

En outre, le dispositif de la figure 4 comporte des moyens de liaison 38 qui permettent la communication fluidique entre la sortie 13 du deuxième compartiment et l'entrée 10 du premier compartiment de sorte que l'humidité relative à l'entrée 10 du premier compartiment est égale à l'humidité relative à la sortie 13 du deuxième compartiment.

Le dispositif de la figure 4 comporte également en sortie 12 du premier compartiment :

- un séparateur de phase 30,
- un condenseur 31,
- un capteur de pression 32
- un régulateur de pression 33.

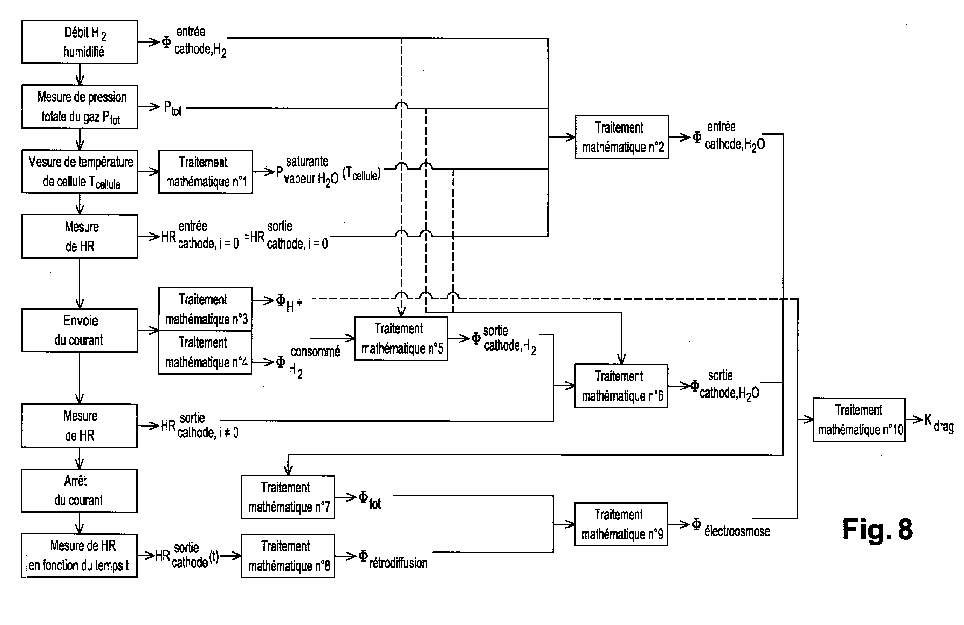

Les étapes de calcul du coefficient électro-osmotique utilisées par un procédé selon l'invention mis en oeuvre par le dispositif de la figure 4 sont maintenant expliquées plus en détail en référence à la figure 8. L'homme du métier pourrait aisément adapter ces étapes pour mettre en oeuvre le procédé selon l'invention mis en oeuvre par le dispositif de la figure 3.

Dans la suite, on appelle « cellule » l'ensemble « membrane-premier compartiment-deuxième compartiment ».

Le procédé selon ce mode de réalisation comporte tout d'abord une étape de mesure du flux d'hydrogène hydraté en entrée 11 du deuxième compartiment. La mesure du flux d'hydrogène hydraté en entrée 11 du deuxième compartiment permet de calculer le flux d'hydrogène $\phi_{2,H_2}^{entrée}$ qui est envoyé en entrée 11 du deuxième compartiment.

Le procédé comporte ensuite de mesure de la pression totale de l'hydrogène saturé $P_{tot}$, ainsi que la température de la cellule $T_{cellule}$.

Le procédé comporte ensuite une étape de calcul de la pression de vapeur saturante d'eau à cette température $P_{vapeurH_2O}^{saturante}(T_{cellule})$ grâce à la formule suivante (traitement mathématique n°1):

$$P_{vapeurH_2O}^{saturante}(T_{cellule}) = 10^{\,29,8605 - \frac{3152,2}{T_{cellule}} - 7,3037 log_{10} T_{cellule} + 2,42 \cdot 10^{-9} \times T_{cellule} + 1,81 \cdot 10^{-6} \times T_{cellule}^2}$$

Le procédé comporte ensuite une étape de mesure de l'humidité relative en sortie du deuxième compartiment en l'absence de courant dans le dispositif $HR_{2,i=0}^{sortie}$.

Or, lorsqu'il n'y a pas de courant, le flux d'eau reste le même partout, et donc l'humidité relative en sortie du premier compartiment est égale à l'humidité relative en entrée du deuxième compartiment :

$$HR_{2,i=0}^{entrée} = HR_{1,i=0}^{sortie}$$

Ces données permettent alors de calculer le flux d'eau en entrée du deuxième compartiment $\phi_{2,H_2O}^{entrée}$ grâce à

la formule suivante (traitement mathématique n °2):

$$HR_{2,i=0}^{entrée} = \frac{\phi_{2,H_2O}^{entrée}}{\phi_{2,H_2O}^{entrée} + \phi_{2,H_2}^{entrée}} * \frac{P_{tot}}{P_{vapeurH_2O}^{saturante}(T_{cellule})}$$

$$\Rightarrow \phi_{2,H_2O}^{entrée} = \frac{HR_{2,i=0}^{entrée}}{\dfrac{P_{tot}}{P_{vapeurH_2O}^{saturante}(T_{cellule})} - HR_{2,i=0}^{entrée}} * \phi_{cathode,H_2}^{entrée}$$

$\phi_{2,H_2O}^{entrée}$ est donc le flux d'eau entrant dans le système lorsqu'aucun courant n'est appliqué.

Jusqu'ici aucun courant n'était appliqué entre l'anode et la cathode.

On établit ensuite un courant entre l'anode et la cathode de façon à créer un courant de protons à travers la membrane.

Connaissant le courant 1 appliqué par l'alimentation électrique 16 qui relie l'anode 5 à la cathode 6, on peut calculer le flux de protons grâce à la formule suivante (traitement mathématique n°3) :

$$\phi_{H^+} = \frac{I}{N_A * e^-}$$

Avec : $N_A$ : Nombre Avogadro $6.023 \times 10^{23}$ $mol^{-1}$
$e^-$: Charge élémentaire $1,6 \times 10^{-19}$ C

En outre, comme il y a la réduction de proton ($2H^+ + 2e^- \rightarrow H_2$) à la cathode, il y a une quantité de l'hydrogène supplémentaire crée qui s'ajoute au flux d'hydrogène hydraté à la sortie de cathode (resp. consommée à l'anode), ce qui peut être calculé à partir du courant envoyé grâce à la formule suivante :

$$\phi_{H_2}^{consommé} = \frac{I}{2 * N_A * e^-}$$ (traitement mathématique n°4).

Le procédé comporte ensuite une étape de calcul du flux total de l'hydrogène à la sortie de cathode grâce à la formule suivante :

$$\phi_{2,H_2}^{sortie} = \phi_{2,H_2}^{entrée} + \phi_{H_2}^{consommé}$$ (traitement mathématique n°5).

Le procédé comporte ensuite une étape de calcul du flux d'eau en sortie de la cathode $\phi_{2,H_2O}^{sortie}$ (traitement mathématique n°6).

En effet, lorsque les protons traversent la membrane, l'eau est amenée du premier compartiment vers le deuxième compartiment par les protons et donc, lorsque l'on se déplace dans le deuxième compartiment suivant la direction longitudinale, depuis l'entrée vers la sortie, la valeur de l'humidité relative va augmenter.

Le courant entre l'anode et la cathode doit être maintenu pendant une durée suffisamment longue pour que le système atteigne de nouveau un régime équilibre.

La valeur de l'humidité relative à l'équilibre $HR_{2,i\neq0}^{sortie}$ en présence d'un courant permet alors de calculer le flux d'eau à la sortie du deuxième compartiment $\phi_{2,H_2O}^{sortie}$ grâce à la formule suivante :

$$HR_{2,i\neq0}^{sortie} = \frac{\phi_{2,H_2O}^{sortie}}{\phi_{2,H_2O}^{sortie} + \phi_{2,H_2}^{sortie}} * \frac{P_{tot}}{P_{vapeurH_2O}^{saturante}(T_{cellule})}$$

$$\Rightarrow \phi_{2,H_2O}^{sortie} = \frac{HR_{2,i\neq0}^{sortie}}{\dfrac{P_{tot}}{P_{vapeurH_2O}^{saturante}(T_{cellule})} - HR_{2,i\neq0}^{sortie}} * \phi_{2,H_2}^{sortie}$$

Le procédé comporte ensuite une étape de calcul du flux d'eau total $\phi_{total}$ qui traverse la membrane du premier compartiment vers le deuxième compartiment lorsqu'un courant est établit entre l'anode et la cathode grâce à la formule suivante :

$$\phi_{total} = \phi_{2,H_2O}^{sortie} - \phi_{2,H_2O}^{entrée} \quad \text{(traitement mathématique n°7)}.$$

Le procédé selon l'invention comporte ensuite, de préférence, une étape de calcul du flux de rétrodiffusion qui traverse la membrane du deuxième compartiment vers le premier compartiment (traitement mathématique n°8), du fait de la présence d'un gradient de la concentration d'eau locale entre chaque surface de la membrane de chaque compartiment, en raison de limitation du transport des gaz dans le premier et le deuxième compartiment, du fait de la présence des électrodes.

Pour calculer ce flux de rétrodiffusion, le procédé selon l'invention propose d'arrêter le courant entre l'anode et la cathode et de mesurer l'évolution de l'humidité relative en sortie de la cathode $HR_2^{sortie}(t)$ en fonction du temps à partir du moment où on l'arrête le courant.

Cette humidité relative $HR_2^{sortie}(t)$ est ensuite convertie en flux d'eau.

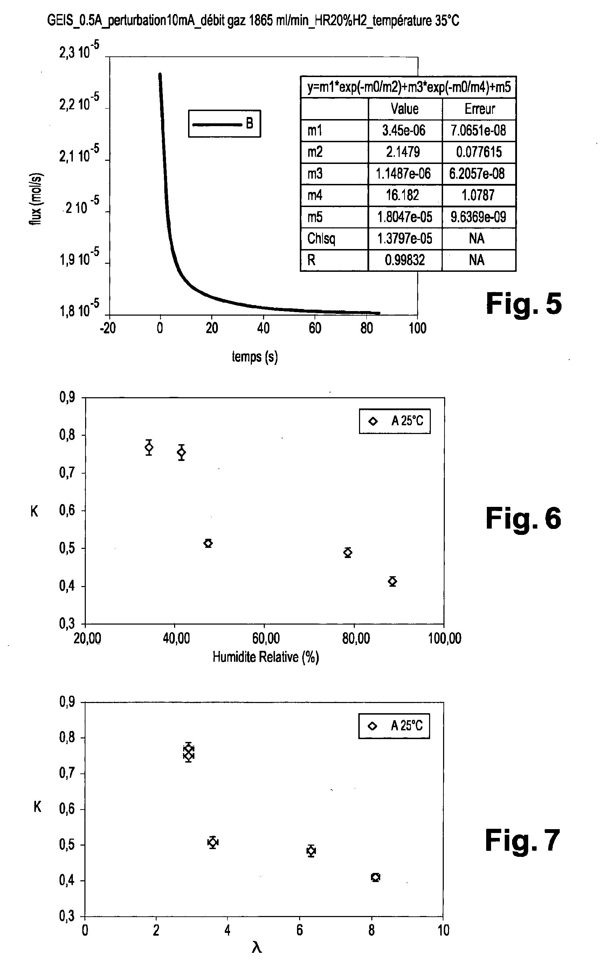

La figure 5 représente la courbe d'évolution du flux d'eau obtenue en fonction du temps. Cette courbe est ensuite interpolée. En effet, on recherche la fonction de la forme $\lambda_1 e^{-t/\tau1} + \lambda_2 e^{-t/\tau2} + \lambda_3$ qui s'approche le plus de cette courbe. Le flux de rétrodiffusion $\phi_{rétrodiffusion}$ est alors égal au coefficient $\lambda1$ ou $\lambda2$ associé à la constante de temps T1 ou T2 la plus élevée.

Le procédé comporte ensuite une étape de calcul de flux d'électro-osmose $\phi_{électroosmose}$ grâce à la formule suivante (traitement mathématique n°9) :

$$\phi_{électroosmose} = \phi_{total} + \phi_{rétrodiffusion}$$

Enfin, le procédé selon l'invention comporte une étape de calcul du coefficient de transport électro-osmotique $K_{drag}$, grâce à la formule suivante (traitement mathématique n°10):

$$K_{drag} = \frac{\phi_{électroosmose}}{\phi_{H^+}}.$$

Le procédé tel que décrit précédemment peut être réalisé en envoyant en entrée du deuxième compartiment des flux d'hydrogène hydraté présentant des humidités relatives afin de pouvoir étudier l'évolution du coefficient de transport électro-osmotique en fonction de l'humidité relative dans la cellule. Les résultats obtenus par le procédé selon l'invention pour le coefficient K pour différentes valeurs de l'humidité relative, à une température de 25°C, sont donnés sur la figure 6.

Par ailleurs, en utilisant des isothermes de sorption mesurés par ailleurs, donnant la relation entre la quantité d'eau dans la membrane et l'humidité relative dans la cellule, il est possible, grâce au procédé selon l'invention de connaître le coefficient de transport électro-osmotique K en fonction de la quantité d'eau et de la température. Les résultats obtenus par le procédé selon l'invention sont représentés sur la figure 7.

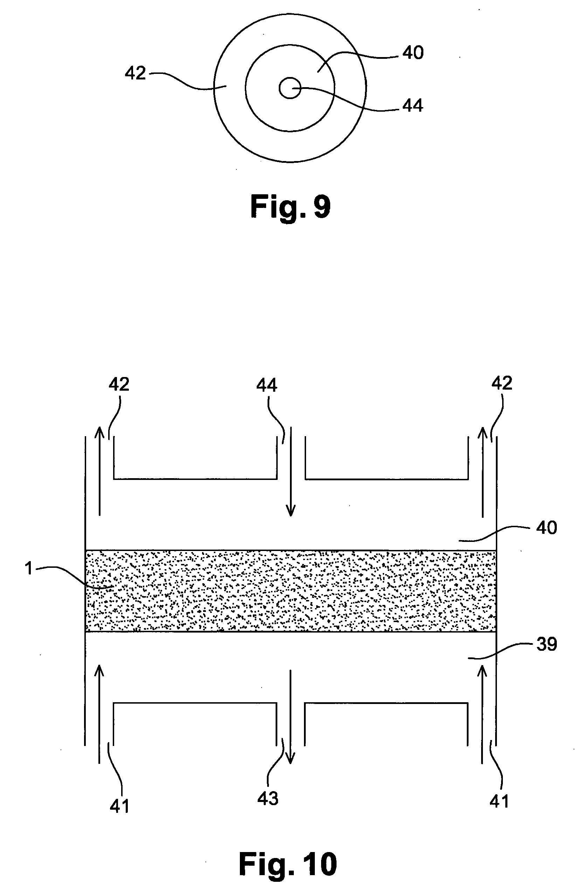

On peut par exemple utiliser des membranes de forme non parallélépipédique. Par exemple, les figures 9 et 10 représentent un dispositif mettant en oeuvre l'invention, dans lequel la membrane 1 présente une section longitudinale cylindrique. Dans ce mode de réalisation, le premier compartiment 39 et le deuxième compartiment 40 s'étendent de part et d'autre de la membrane. Le premier compartiment présente une section longitudinale de forme cylindrique, tout comme le deuxième compartiment. Le premier compartiment 39 comporte une entré en forme d'anneau 41 (vue en coupe) et une sortie 43. Les entrées du premier compartiment sont situées sur la périphérie du premier compartiment. La sortie 43 du premier compartiment est située au niveau du centre du premier compartiment. Le deuxième compartiment comporte, lui, une entrée 44 située en face de la sortie 43 du premier compartiment, et une sortie en forme d'anneau 42 situées chacune en face d'une des entrées 41 du premier compartiment. Tout comme dans le mode de réalisation précédent, les flux de gaz hydraté parcourent donc les deux compartiments en sens inverse l'un de l'autre.

## Revendications

1. Procédé de détermination du coefficient de transport électro-osmotique (K) d'une membrane (1) échangeuse de protons, la membrane (1) étant disposée entre un premier compartiment (2) et un deuxième compartiment (3), le premier et le deuxième compartiments (2, 3) s'étendant chacun de part et d'autre de la membrane (1), le premier et le deuxième compartiment présentant chacun une entrée (10, 11) et une sortie (12, 13), l'entrée (10) du premier compartiment (2) étant située vis-à-vis de la sortie (13) du deuxième compartiment (3) et inversement, le procédé comportant les étapes suivantes :

   - (i) Etablissement d'un flux de gaz hydraté (14, 15) dans chacun des compartiments (2, 3), le flux de gaz hydraté dans le premier compartiment étant un flux d'hydrogène hydraté, le flux de gaz hydraté étant dirigé, dans chacun des compartiments, de l'entrée vers la sortie, le flux de gaz hydraté, dans chacun des compartiments, étant contrôlé de façon à ce que, en régime permanent, l'humidité relative en entrée d'au moins un des compartiments soit égale à l'humidité relative en sortie de l'autre des compartiments ;
   - (ii) Etablissement d'un courant de protons à travers la membrane (1) du premier compartiment (2) en direction du deuxième compartiment (3),
   - (iii) Détermination du flux d'eau total ($\phi_{total}$) qui traverse la membrane (1), en régime permanent, du premier compartiment (2) en direction du deuxième compartiment (3) à l'aide d'au moins une mesure de la quantité d'eau en sortie du deuxième compartiment,
   - (iv) Calcul du coefficient de transport électro-osmotique (K) à partir du flux d'eau total ($\phi_{total}$).

2. Procédé selon la revendication précédente, **caractérisé en ce que** le flux de gaz hydraté, dans chacun des compartiments, est en outre contrôlé de façon à ce que, en régime permanent, l'humidité relative reste sensiblement la même entre l'entrée et la sortie de chaque compartiment.

3. Procédé selon la revendication précédente, **caractérisé en ce que** le flux de gaz hydraté (14, 15) qui traverse chacun des compartiments est entre 10 fois et 2000 fois plus important que le flux de protons et d'eau qui traverse la membrane (1), le flux de gaz hydraté étant de préférence sensiblement égal à 1000 fois le flux de protons qui traverse la membrane (1).

4. Procédé de détermination selon l'une quelconque des revendications précédentes, **caractérisé en ce que** l'étape (i) comporte les étapes suivantes

   - Envoi d'un flux d'hydrogène hydraté unique en entrée (11) d'un des compartiments (3) de façon à ce que ce flux d'hydrogène unique traverse ce compartiment,
   - Récupération du flux d'hydrogène hydraté unique en sortie (13) de ce compartiment,
   - Envoi du flux d'hydrogène hydraté unique récupéré en entrée (10) de l'autre des compartiments (2).

5. Procédé selon la revendication précédente, **caractérisé en ce que** la mesure de la quantité d'eau en sortie du deuxième compartiment est une mesure de l'humidité relative en sortie du deuxième compartiment.

6. Procédé de détermination selon l'une quelconque des revendications 1 à 3, **caractérisé en ce que** l'étape (i) comporte les étapes simultanées suivantes :

- Envoi d'un flux d'hydrogène hydraté en entrée (10) du premier compartiment (2) de façon à ce que l'humidité relative en entrée du premier compartiment $\left( HR_1^{entrée} \right)$ soit égale à l'humidité relative en sortie du deuxième compartiment $\left( HR_2^{sortie} \right)$;

- Envoi d'un d'un flux de gaz hydraté en entrée du deuxième compartiment de façon à ce que l'humidité relative en entrée du deuxième compartiment $\left( HR_2^{entrée} \right)$ soit égale à l'humidité relative en sortie du premier compartiment $\left( HR_1^{sortie} \right)$.

7. Procédé selon la revendication précédente, **caractérisé en ce que** la mesure de la quantité d'eau en sortie du deuxième compartiment est une mesure de la masse d'eau à la sortie du deuxième compartiment.

8. Procédé de détermination selon l'une quelconque des revendications précédentes, **caractérisé en ce que** l'étape (iii) comporte les étapes suivantes :

- Calcul du flux d'eau envoyé en entrée d'un des compartiments $\left( \phi_{2,H_2O}^{entrée} \right)$,

- Mesure de l'humidité relative en sortie de ce compartiment $\left( HR_{2,i\neq0}^{sortie} \right)$,

- Calcul du flux d'eau en sortie de ce compartiment $\left( \phi_{2,H_2O}^{sortie} \right)$,

- Calcul du flux d'eau total ($\phi_{total}$) ayant traversé la membrane (1) en calculant la différence entre le flux d'eau en entrée et en sortie de ce compartiment $\left( \phi_{total} = \phi_{2,H_2O}^{sortie} - \phi_{2,H_2O}^{entrée} \right)$.

9. Procédé de détermination selon l'une quelconque des revendications 1 à 8, **caractérisé en ce que**, lors de l'étape (iv), le flux d'eau total ($\phi_{total}$) est assimilé à un flux d'électro-osmose ($\phi_{électroosmose}$).

10. Procédé de détermination selon l'une quelconque des revendications 1 à 8, **caractérisé en ce que** l'étape (iv) comporte les étapes suivantes :

- (v) une étape de calcul du flux de rétrodiffusion ($\phi_{rétrodiffusion}$) qui traverse la membrane (1) du deuxième compartiment (3) vers le premier compartiment (2);
- (vi) une étape de calcul du flux d'électro-osmose ($\phi_{électroosmose}$) en faisant la somme du flux d'eau total et du flux d'eau de rétrodiffusion ($\phi_{électroosmose} = \phi_{total} + \phi_{rétrodiffusion}$).

11. Procédé de détermination selon la revendication précédente, **caractérisé en ce que** l'étape (v) comporte les étapes suivantes :

- Arrêt du courant de protons à travers la membrane;
- Enregistrement de la courbe représentative de l'évolution de l'humidité relative en sortie du deuxième compartiment en fonction du temps $\left( HR_2^{sortie}(t) \right)$ ;
- Calcul de la courbe représentative de l'évolution du flux d'eau en sortie du deuxième compartiment en fonction du temps ;
- Calcul du flux de rétrodiffusion ($\phi_{rétrodiffusion}$) par interpolation de la courbe représentative de l'évolution du flux d'eau en sortie du deuxième compartiment en fonction du temps.

12. Procédé de détermination selon la revendication précédente, **caractérisé en ce que** l'étape de calcul du flux de rétrodiffusion par interpolation comporte les étapes suivantes :

- Recherche de la fonction de la forme $\lambda_1 e^{-t/\tau_1} \lambda_2 e^{-t/\tau_2} + \lambda_3$ qui s'approche le plus de la courbe représentative de l'évolution du flux d'eau en sortie du deuxième compartiment en fonction du temps;
- Identification du flux de rétrodiffusion au coefficient $\lambda 1$ ou $\lambda 2$ associée à la constante de temps T1 ou T2 la plus élevée.

**13.** Dispositif adapté pour la détermination du coefficient de transport électro-osmotique d'une membrane échangeuse de protons à l'aide du procédé selon l'une quelconque des revendications précédentes, **caractérisé en ce qu'**il comporte les éléments suivants :

- Un premier et un deuxième compartiments (2, 3) s'étendant de part et d'autre de la membrane (1), le premier et le deuxième compartiment comportant chacun une entrée (10, 11) et une sortie (12, 13), l'entrée (10) du premier compartiment (2) étant située vis-à-vis de la sortie (13) du deuxième compartiment (3) et inversement,
- au moins une alimentation en gaz hydraté (8, 21, 28) apte à envoyer un flux d'hydrogène hydraté en entrée (10) du premier compartiment (2) et un flux de gaz hydraté (3) en entrée (11) du deuxième compartiment (3),
- Une alimentation électrique (16) apte à établir un courant protonique à travers la membrane (1) du premier compartiment (2) vers le deuxième compartiment (3),
- Des moyens de mesure (23) de la quantité d'eau en sortie du deuxième compartiment,
- Des moyens de mesure et de contrôle du débit (19, 26) de l'alimentation en en gaz hydraté en entrée du deuxième compartiment,
- Un calculateur apte à mettre en oeuvre les étapes du procédé selon l'une quelconque des revendications précédentes.

**14.** Dispositif selon la revendication précédente, **caractérisé en ce qu'**il comporte en outre un système de bouclage (38) qui relie la sortie du deuxième compartiment à l'entrée du premier compartiment.

**15.** Dispositif selon l'une quelconque des revendications 13 ou 14, **caractérisé en ce que** la membrane s'étend suivant une direction longitudinale.

**Patentansprüche**

**1.** Bestimmungsverfahren des elektro-osmotischen Transportkoeffizienten (K) einer Protonenaustauschmenbran (1), wobei die Membran (1) zwischen einem ersten Fach (2) und einem zweiten Fach (3) angeordnet ist, wobei sich die ersten und zweiten Fächer (2, 3) jeweils auf der einen und der anderen Seite der Membran (1) erstrecken, wobei das erste und das zweite Fach jeweils einen Eingang (10, 11) und einen Ausgang (12, 13) aufweisen, wobei sich der Eingang (10) des ersten Fachs (2) gegenüber vom Ausgang (13) des zweiten Fachs (3) befindet und umgekehrt, wobei das Verfahren die folgenden Stufen umfasst:

- (i) Herstellung eines hydrierten Gasflusses (14, 15) in jedem der Fächer (2, 3), wobei der hydrierte Gasfluss in dem ersten Fach ein hydrierter Wasserstofffluss ist, wobei der hydrierte Gasfluss in jedem der Fächer vom Eingang zum Ausgang gerichtet ist, wobei der hydrierte Gasfluss in jedem der Fächer derart kontrolliert ist, dass die relative Feuchtigkeit im Dauerbetrieb am Eingang wenigstens eines der Fächer gleich der relativen Feuchtigkeit am Ausgang des anderen Fachs ist;
- (ii) Herstellung eines Protonenstroms durch die Membran (1) des ersten Fachs (2) in Richtung des zweiten Fachs (3),
- (iii) Im Dauerbetrieb Bestimmung des totalen Wasserflusses ($\varnothing_{total}$), der die Membran (1) vom ersten Fach (2) in Richtung zum zweiten Fach (3) durchquert, mithilfe wenigstens einer Messung der Wassermenge am Ausgang des zweiten Fachs,
- (iv) Berechnung des elektro-osmotischen Transportkoeffizienten (K) ausgehend von dem totalen Wasserfluss ($\varnothing_{total}$).

**2.** Verfahren gemäß einem der voranstehenden Ansprüche, **dadurch gekennzeichnet, dass** der hydrierte Gasfluss in jedem der Fächer darüber hinaus derart kontrolliert wird, dass die relative Feuchtigkeit im Dauerbetrieb zwischen dem Eingang und dem Ausgang jedes Fachs deutlich dieselbe bleibt.

**3.** Verfahren gemäß dem voranstehenden Anspruch, **dadurch gekennzeichnet, dass** der hydrierte Gasfluss (14, 15), der jedes der Fächer durchquert, zwischen 10 Mal und 2.000 Mal größer ist als der Protonen- und Wasserfluss, der die Membran (1) durchquert, wobei der hydrierte Gasfluss bevorzugt deutlich gleich des 1.000-fachen des Protonenflusses ist, der die Membran (1) durchquert.

4.  Bestimmungsverfahren gemäß einem der voranstehenden Ansprüche, **dadurch gekennzeichnet, dass** die Stufe (i) die folgenden Stufen umfasst:

    - Versand eines einzigartigen hydrierten Wasserstoffflusses am Eingang (11) eines der Fächer (3) derart, dass dieser einzigartige Wasserstofffluss dieses Fach durchquert,
    - Wiederauffangen des einzigartigen hydrierten Wasserstoffflusses am Ausgang (13) dieses Faches,
    - Versand des einzigartigen hydrierten Wasserstoffflusses am Eingang (10) des anderen Fachs (2).

5.  Verfahren gemäß dem voranstehenden Anspruch, **dadurch gekennzeichnet, dass** die Messung der Wassermenge am Ausgang des zweiten Fachs eine Messung der relativen Feuchtigkeit am Ausgang des zweiten Fachs ist.

6.  Bestimmungsverfahren gemäß Anspruch 1 bis 3, **dadurch gekennzeichnet, dass** die Stufe (i) die folgenden gleichzeitigen Stufen umfasst:

    - Versand eines hydrierten Wasserstoffflusses am Eingang (10) des ersten Fachs (2) derart, dass die relative Feuchtigkeit am Eingang des ersten Fachs ($HR_1^{Eingang}$) gleich der relativen Feuchtigkeit am Ausgang des zweiten Fachs ($HR_2^{Ausgang}$) ist;
    - Versand eines hydrierten Gasflusses am Eingang des zweiten Fachs derart, dass die relative Feuchtigkeit am Eingang des zweiten Fachs ($HR_2^{Eingang}$) gleich der relativen Feuchtigkeit am Ausgang des ersten Fachs ($HR_1^{Ausgang}$) ist.

7.  Verfahren gemäß dem voranstehenden Anspruch, **dadurch gekennzeichnet, dass** die Messung der Wassermenge am Ausgang des zweiten Fachs eine Messung der Wassermasse am Ausgang des zweiten Fachs ist.

8.  Bestimmungsverfahren gemäß einem der voranstehenden Ansprüche, **dadurch gekennzeichnet, dass** die Stufe (iii) die folgenden Stufen umfasst:

    - Berechnung des versandten Wasserflusses am Eingang eines der Fächer $\left( \emptyset_{2,H_2O}^{Eingang} \right)$,

    - Messung der relativen Feuchtigkeit am Ausgang dieses Fachs $\left( HR_{2,i \neq O}^{Ausgang} \right)$,

    - Berechnung des Wasserflusses am Ausgang dieses Fachs $\left( \emptyset_{2,H_2O}^{Ausgang} \right)$,

    - Berechnung des totalen Wasserflusses ($\emptyset_{total}$), der die Membran (1) durchquert hat, durch Berechnung der Differenz zwischen dem Wasserfluss am Eingang und am Ausgang dieses Fachs

    $$( \emptyset_{total} = ( \emptyset_{2,H_2O}^{Ausgang} - \emptyset_{2,H_2O}^{Eingang} )$$

9.  Bestimmungsverfahren gemäß Anspruch 1 bis 8, **dadurch gekennzeichnet, dass** der totale Wasserfluss ($\emptyset_{total}$) in der Stufe (iv) einem elektro-osmotischen Fluss ($\emptyset_{Elektroosmose}$) gleichgestellt ist.

10. Bestimmungsverfahren gemäß Anspruch 1 bis 8, **dadurch gekennzeichnet, dass** die Stufe (iv) die folgenden Stufen umfasst:

    (v) eine Berechnungsstufe des Rückstreuungsflusses ($\emptyset_{Rückstreuung}$), der die Membran (1) des zweiten Fachs (3) zum ersten Fach (2) durchquert;
    (vi) eine Berechnungsstufe des elektro-osmotischen Flusses ($\emptyset_{Elektroosmose}$) durch Bildung der Summe des totalen Wasserflusses und des Rückstreuungswasserflusses ($\emptyset_{Elektroosmose} = \emptyset_{total} + \emptyset_{Rückstreuung}$).

11. Bestimmungsverfahren gemäß dem voranstehenden Anspruch, **dadurch gekennzeichnet, dass** die Stufe (iv) die folgenden Stufen umfasst:

    - Abschaltung des Protonenstroms durch die Membran;
    - Abspeicherung der die Entwicklung der relativen Feuchtigkeit am Ausgang des zweiten Fachs darstellenden Kurve in Abhängigkeit von der Zeit ($HR_2^{Ausgang}$ (t));

- Berechnung der die Entwicklung des Wasserflusses am Ausgang des zweiten Fachs darstellenden Kurve in Abhängigkeit von der Zeit:
- Berechnung des Rückstreuungsflusses ($\emptyset_{Rückstreuung}$) per Interpolation der die Entwicklung des Wasserflusses am Ausgang des zweiten Faches darstellenden Kurve in Abhängigkeit von der Zeit.

12. Bestimmungsverfahren gemäß dem voranstehenden Anspruch, **dadurch gekennzeichnet, dass** die Berechnungsstufe des Rückstreuungsflusses per Interpolation die folgenden Stufen umfasst:

- Suche der Funktion der Form $\lambda_1 e^{-t/\tau 1} + \lambda_2 e^{-t/\tau 2} + \lambda_3$, die sich am weitesten der die Entwicklung des Wasserflusses darstellenden Kurve am Ausgang des zweiten Fachs annähert, in Abhängigkeit von der Zeit;
- Identifikation des Rückstreuungsflusses am Koeffizienten $\lambda 1$ oder $\lambda 2$ in Verbindung mit der höchsten Zeitkonstanten T2 oder T2.

13. Für die Bestimmung des elektro-osmotischen Transportkoeffizienten einer Protonenaustauschmembran mithilfe des Prozesses angepasste Vorrichtung gemäß einem der voranstehenden Ansprüche, **dadurch gekennzeichnet, dass** sie die folgenden Stufen umfasst:

- ein erstes und ein zweites Fach (2, 3), die sich auf jeder Seite der Membran (1) erstrecken, wobei das erste und das zweite Fach jeweils einen Eingang (10, 11) und einen Ausgang (12, 13) umfassen, wobei der Eingang (10) des ersten Fachs (2) sich gegenüber dem Ausgang (13) des zweiten Fachs (3) befindet und umgekehrt,
- wenigstens eine Versorgung mit hydriertem Gas (8, 21, 28), die geeignet ist, einen hydrierten Wasserstofffluss am Eingang (10) des ersten Fachs (2) und einen hydrierten Gasfluss (3) am Eingang (11) des zweiten Fachs (3) zu senden,
- eine Stromversorgung (16), die geeignet ist, einen Protonenstrom durch die Membran (1) des ersten Fachs (2) zum zweiten Fach (3) herzustellen,
- Messmittel (23) der Wassermenge am Ausgang des zweiten Fachs,
- Mess- und Kontrollmittel des Durchsatzes (19, 26) der Versorgung mit hydriertem Gas am Eingang des zweiten Fachs,
- einen Rechner, der geeignet ist, die Stufen des Prozesses gemäß einem der voranstehenden Ansprüche umzusetzen.

14. Vorrichtung gemäß dem voranstehenden Anspruch, **dadurch gekennzeichnet, dass** sie darüber hinaus ein Rückführungssystem (38) umfasst, das den Ausgang des zweiten Fachs mit dem Eingang des ersten Fachs verbindet.

15. Vorrichtung gemäß Anspruch 13 oder 14, **dadurch gekennzeichnet, dass** die Membran sich gemäß einer Längsrichtung erstreckt.

**Claims**

1. Method of determining the electroosmotic transport coefficient (K) of a proton exchange membrane (1), the membrane (1) being arranged between a first compartment (2) and a second compartment (3), the first and the second compartments (2, 3) each extending on each side of the membrane (1), the first and second compartments each having an inlet (10, 11) and an outlet (12, 13), the inlet (10) to the first compartment (2) being located facing the outlet (13) from the second compartment (3) and vice versa, the method including the following steps:

(i) Set up a hydrated gas flow (14, 15) in each compartment (2, 3), the hydrated gas flow in the first compartment being a flow a hydrated hydrogen, the hydrated gas flow being directed in each compartment from the inlet to the outlet, the hydrated gas flow in each compartment being controlled such that under steady state conditions, the relative humidity at the inlet to at least one of the compartments is equal to the relative humidity at the outlet from the other of the compartments:

(ii) Set up a proton current through the membrane (1) from the first compartment (2) towards the second compartment (3),

(iii) Determine the total water flow ($\phi_{total}$) passing through the membrane (1) under steady state conditions, from the first compartment (2) towards the second compartment (3) by means of at least one water quantity measurement means at the outlet from the second compartment,

(iv) Calculate the electroosmotic transport coefficient (K) using the total water flow ($\phi_{total}$).

2. Method according to the previous claim, **characterised in that** the hydrated gas flow in each of the compartments is also controlled such that under steady state conditions, the relative humidity remains approximately the same between the inlet and outlet of each compartment.

3. Method according to the previous claim, **characterised in that** the hydrated gas flow (14, 15) passing through each of the compartments is between 10 times and 2000 times higher than the proton and water flow that passes through the membrane (1), the hydrated gas flow preferably being equal to approximately 1000 times the proton flow passing through the membrane (1).

4. Determination method according to any one of the previous claims, **characterised in that** step (i) comprises the following steps:

- Send a single hydrated hydrogen flow to the input (11) to one of the compartments (3) such that this single hydrogen flow passes through this compartment,
- Recover the single hydrated hydrogen flow at the outlet (13) from this compartment,
- Send the recovered single hydrated hydrogen flow to the inlet (10) to the other of the compartments (2).

5. Method according to the previous claim, **characterised in that** the measurement of the water quantity at the outlet from the second compartment is a measurement of the relative humidity at the outlet from the second compartment.

6. Determination method according to any one of claims 1 to 3, **characterised in that** step (i) comprises the following simultaneous steps:

- Send a hydrated hydrogen flow to the inlet (10) to the first compartment (2) such that the relative humidity at the inlet to the first compartment ($HR_1{}^{inlet}$) is equal to the relative humidity at the outlet from the second compartment ($HR_2{}^{outlet}$);
- Send a hydrated gas flow to the inlet to the second compartment such that the relative humidity at the inlet to the second compartment ($HR_2{}^{inlet}$) is equal to the relative humidity at the outlet from the first compartment ($HR_1{}^{outlet}$).

7. Method according to the previous claim, **characterised in that** the measurement of the water quantity at the outlet from the second compartment is a measurement of the water mass at the outlet from the second compartment.

8. Determination method according to any one of the previous claims, **characterised in that** step (iii) comprises the following steps:

- Calculate the water flow sent to the inlet to one of the compartments $\left(\emptyset_{2,H_2O}^{inlet}\right)$,

- Measure the relative humidity at the outlet from this compartment $\left(HR_{2,i\neq O}^{outlet}\right)$;

- Calculate the water flow at the outlet from this compartment $\left(\emptyset_{2,H_2O}^{outlet}\right)$,

- Calculate the total water flow ($\phi_{total}$) that passed through the membrane (1) by calculating the difference between the water flow at the inlet and outlet of this compartment $\left(\phi_{total} = \emptyset_{2,H_2O}^{outlet} - \emptyset_{2,H_2O}^{inlet}\right)$.

9. Determination method according to any one of claims 1 to 8, **characterised in that** during step (iv), the total water flow ($\phi_{total}$) is considered to be an electro-osmotic flow ($\phi_{electroosmosis}$).

10. Determination method according to any one of claims 1 to 8, **characterised in that** step (iv) includes the following steps:

(v) a step to calculate the back diffusion flow ($\phi_{back}$ diffusion) that passes through the membrane (1) from the second compartment (3) to the first compartment (2);
(vi) a step to calculate the electroosmotic flow ($\phi_{electroosmosis}$) by taking the sum of the total water flow and the back diffusion water flow ($\phi_{electroosmosis} = \phi_{total} + \phi_{back}$ diffusion).

11. Determination method according to the previous claim, **characterised in that** step (v) includes the following steps:

- Stop the proton current through the membrane;
- Record the curve representing the variation of relative humidity at the outlet from the second compartment as a function of time $\left(HR_2^{outlet}(t)\right)$;
- Calculate the curve representing the variation of water flow at the outlet from the second compartment as a function of time;
- Calculate the back diffusion flow ($\phi_{\text{back diffusion}}$) by interpolating the curve representing the variation of the water flow at the outlet from the second compartment as a function of time.

12. Determination method according to the previous claim, **characterised in that** the step to calculate the back diffusion flow by interpolation includes the following steps:

- Search for the function in the form $\lambda_1 e^{-t/\tau 1} + \lambda_2 e^{-t/\tau 2} + \lambda_3$ that is closest to the curve representing the variation of the water flow at the outlet from the second compartment as a function of time;
- Identify the back diffusion flow with the coefficient $\lambda 1$ or $\lambda 2$ associated with the highest time constant $\tau 1$ or $\tau 2$.

13. Device configured to determine the electroosmotic transport coefficient of a proton exchange membrane using the method according to any one of the previous claims, **characterised in that** it comprises the following elements:

- a first and a second compartments (2, 3) each extending on each side of the membrane (1), the first and second compartments each having an inlet (10, 11) and an outlet (12, 13), the inlet (10) to the first compartment (2) being located facing the outlet (13) from the second compartment (3) and vice versa;
- at least one hydrated gas supply (8, 21, 28) capable of sending a hydrated hydrogen flow to the inlet (10) to the first compartment (2) and a hydrated gas flow (3) to the inlet (11) to the second compartment (3),
- an electric power supply (16) capable of setting up a proton current through the membrane (1) from the first compartment (2) to the second compartment (3),
- means of measuring (23) the water quantity at the outlet from the second compartment,
- means of measuring and controlling the supply flow (19, 26) of hydrated gas at the inlet to the second compartment,
- a computer capable of implementing the steps in the method according to any one of the previous claims.

14. Device according to the previous claim, **characterised in that** it also comprises a loopback system (38) that connects the outlet from the second compartment to the inlet to the first compartment.

15. Device according to either claim 13 or 14, **characterised in that** the membrane extends along a longitudinal direction.

**Fig. 1**

**Fig. 2**

**Fig. 3**

EP 2 606 332 B1

**Fig. 4**

GEIS_0.5A_perturbation10mA_débit gaz 1865 ml/min_HR20%H2_température 35°C

| y=m1*exp(-m0/m2)+m3*exp(-m0/m4)+m5 | | |
|---|---|---|
| | Value | Erreur |
| m1 | 3.45e-06 | 7.0651e-08 |
| m2 | 2.1479 | 0.077615 |
| m3 | 1.1487e-06 | 6.2057e-08 |
| m4 | 16.182 | 1.0787 |
| m5 | 1.8047e-05 | 9.6369e-09 |
| Chlsq | 1.3797e-05 | NA |
| R | 0.99832 | NA |

**Fig. 5**

**Fig. 6**

**Fig. 7**

```
┌─────────────────┐
│    Débit H₂     │      entrée
│    humidifié    │──▶ Φ cathode,H₂
└─────────────────┘
         │
         ▼
┌─────────────────┐
│ Mesure de pression│──▶ P_tot
│ totale du gaz P_tot│
└─────────────────┘
         │
         ▼
┌─────────────────┐      ┌──────────────┐            saturante
│ Mesure de température│──▶│  Traitement  │──▶ P vapeur H₂O (T_cellule)
│ de cellule T_cellule │   │ mathématique n°1│
└─────────────────┘      └──────────────┘
         │
         ▼
┌─────────────────┐         entrée          sortie
│     Mesure      │──▶ HR cathode, i = 0 = HR cathode, i = 0
│     de HR       │
└─────────────────┘
         │
         ▼
┌─────────────────┐      ┌──────────────┐
│     Envoie      │──▶   │  Traitement  │──▶ Φ_H⁺
│   du courant    │      │ mathématique n°3│
└─────────────────┘      ├──────────────┤
                         │  Traitement  │──▶ Φ consommé
                         │ mathématique n°4│      H₂
                         └──────────────┘
```

$$\Phi^{entrée}_{cathode,H_2}$$

$$P_{tot}$$

Traitement mathématique n°2 $\to \Phi^{entrée}_{cathode,H_2O}$

$$P^{saturante}_{vapeur\ H_2O}(T_{cellule})$$

$$HR^{entrée}_{cathode,\ i=0} = HR^{sortie}_{cathode,\ i=0}$$

Traitement mathématique n°3 $\to \Phi_{H^+}$

Traitement mathématique n°4 $\to \Phi^{consommé}_{H_2}$

Traitement mathématique n°5 $\to \Phi^{sortie}_{cathode,H_2}$

Traitement mathématique n°6 $\to \Phi^{sortie}_{cathode,H_2O}$

$$HR^{sortie}_{cathode,\ i\neq0}$$

Mesure de HR

Arrêt du courant

Traitement mathématique n°7 $\to \Phi_{tot}$

Traitement mathématique n°10 $\to K_{drag}$

Traitement mathématique n°9 $\to \Phi_{électroosmose}$

Mesure de HR en fonction du temps t $\to HR^{sortie}_{cathode}(t)$

Traitement mathématique n°8 $\to \Phi_{rétrodiffusion}$

**Fig. 8**

**Fig. 9**

**Fig. 10**

## RÉFÉRENCES CITÉES DANS LA DESCRIPTION

**Littérature non-brevet citée dans la description**

- **M. ISE et al.** Electro-osmotic drag in polymer electrolyte membranes : an electrophoretic NMR study. *Solid State Ionics,* 1999, vol. 125, 213-223
- **LUO et al.** Electro-osmotic drag coefficient and proton conductivity in Nafion membrane for PEMFC. *International Journal of Hydrogen Energy,* 2009, I-5
- **BRAFT ; MITTELSTEADT.** Electroosmotic drag coefficient of proton exchange membranes as a function of relative humidity. *ECS Transactions,* 2008, vol. 16 (2), 309-316